# EUROPEAN PATENT APPLICATION

(11) **EP 4 744 870 A1**
(43) Date of publication of application: **20.05.2026**
(21) Application number: 25215611.2
(22) Date of filing: 13.11.2025
(51) Int. Cl.: B29C 65/18, B29C 65/30, B29C 65/78, B65B 9/20, B29L 31/00

(54) **LONGITUDINAL ROLLER SEALING UNIT FOR FORMING A TUBULAR FILM**

(30) Priority: 18.11.2024 IT 202400025947
(71) Applicant: Altopack S.P.A., 55011 Altopascio (LU) (IT)
(72) Inventor: LUPORI, Simone, 51019 Via Cantera (PT) (IT)
(74) Representative: Mittler, Andrea

(57) **Abstract**

There is described a longitudinal sealing unit (1) for forming a tubular film for making bags in a packaging apparatus (2) for food products, comprising a forming tube (12) for the vertical sliding of a film made of a packaging material. The longitudinal sealing unit (1) comprises a heating and sliding device (3), a motor block (4), and a positioning device (5) with respect to the forming tube (12). the heating and sliding device (3) comprises a heating block (31), electrical resistors (32) suitable for heating the heating block (31) in which they are included, and sealing rollers (33) rotatably associated with the heating block (31), wherein the sealing rollers (33) have a horizontal rotation axis and are housed in compartments (35) of the heating block (31) so as to be heated and protrude laterally therefrom so as to interact with the overlapping lateral edges of the film (Fig.5).

## Description

The present invention relates to a longitudinal roller sealing unit for forming a tubular film

In the packaging of food products, e.g., pasta, the use of packaging apparatuses, comprising longitudinal sealing units suitable for forming a tubular film from a film made of a packaging material unwound from a reel, is widespread. Said film is usually made of a plastic material or paper.

Said packaging apparatuses comprise means suitable for sliding the film vertically along a forming tube so that the lateral edges of the film overlap and are sealed longitudinally by the longitudinal sealing unit, so as to form the tubular film. The sealing occurs by heating said lateral edges, which join together by melting.

A horizontal sealing then follows, which allows making a bottom, thus forming a bag for containing the food product.

Usually, the film is slid vertically by belts made of nickel-chromium. Slippages can disadvantageously occur, which impair the quality of the longitudinal sealing and therefore of the bag subsequently obtained.

US-9688431 describes a longitudinal sealing unit for forming a tubular film, comprising rollers for the vertical sliding of the film made of a packaging material, and heating rollers suitable for heating lateral edges of the film so that they join together to make the tubular film.

EP-3932811 describes similar heating rollers for making a longitudinal seal, obtaining a film preferably made of a plastic material with a tubular profile.

However, the solutions suggested in US-9688431 and EP-3932811 appear mechanically complex, difficult to control by the operator, and subject to wear.

It is the object of the present invention to make a longitudinal sealing unit with heating rollers for forming a tubular film, made of a packaging material, e.g., plastic or paper, which is simple to make and allows obtaining an effective seal without impairing the quality of the film.

It is a further object of the present invention the fact that the longitudinal sealing unit is easily positionable with respect to the vertically sliding film on a forming tube.

It is a still further object of the present invention the fact that the longitudinal sealing unit is easily accessible by the operator for maintenance operations.

According to the invention, said and further objects are achieved by a longitudinal sealing unit for forming a tubular film for making bags in an apparatus for packaging food products, comprising a forming tube for the vertical sliding of a film made of a packaging material, in which the longitudinal sealing unit comprises a heating and sliding device, a motor block, and a positioning device with respect to the forming tube,
characterised in that
the heating and sliding device comprises a heating block, electrical resistors suitable for heating the heating block in which they are included, and sealing rollers rotatably associated with the heating block, where the sealing rollers have a horizontal rotation axis and are housed in compartments of the heating block so as to be heated and protrude laterally therefrom so as to interact with the overlapping lateral edges of the film,
where the motor block comprises a support plate, drive rollers rotatably associated with the support plate, and a motor, where each drive roller is suitable for actuating the integral rotation of a respective sealing roller, where the drive rollers are actuated synchronously by the motor by means of a synchronization transmission,
where the positioning device is suitable for horizontally moving the heating and sliding device between a sealing position and a rest position, in the sealing position the sealing rollers interacting with the lateral edges of the film carrying out the sealing thereof and therefore the formation of the tubular film, in the rest position the sealing rollers being separated from the film.

Advantageously, the sealing rollers serve a dual function, i.e., they cooperate in the vertical sliding of the film and heat the lateral edges thereof; therefore, the sealing of said lateral edges occurs, forming a tubular film.

The sealing rollers are vertically close together to concentrate the heating and sliding action on a defined segment of film.

The direct actuation of each sealing roller by a respective drive roller directly connected thereto, together with the synchronization transmission, allows an optimal synchronism of the sealing rollers so as to avoid accumulations of film between two consecutive sealing rollers.

These and other features of the present invention will become more apparent from the following detailed description of a practical embodiment thereof, shown by way of non-limiting example in the accompanying drawings, in which:
Figure 1 shows a perspective view of a portion of a packaging apparatus with a longitudinal sealing unit for forming a tubular plastic film according to the present invention;

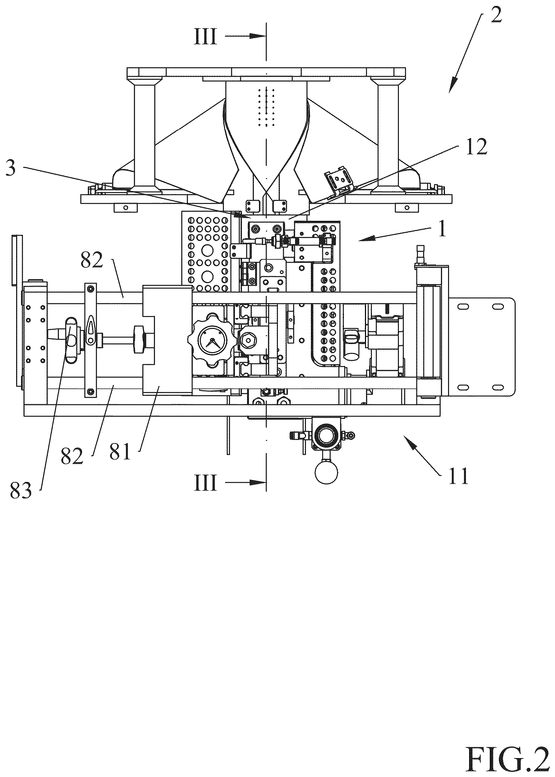

Figure 2 shows a front view of the packaging apparatus in Figure 1;

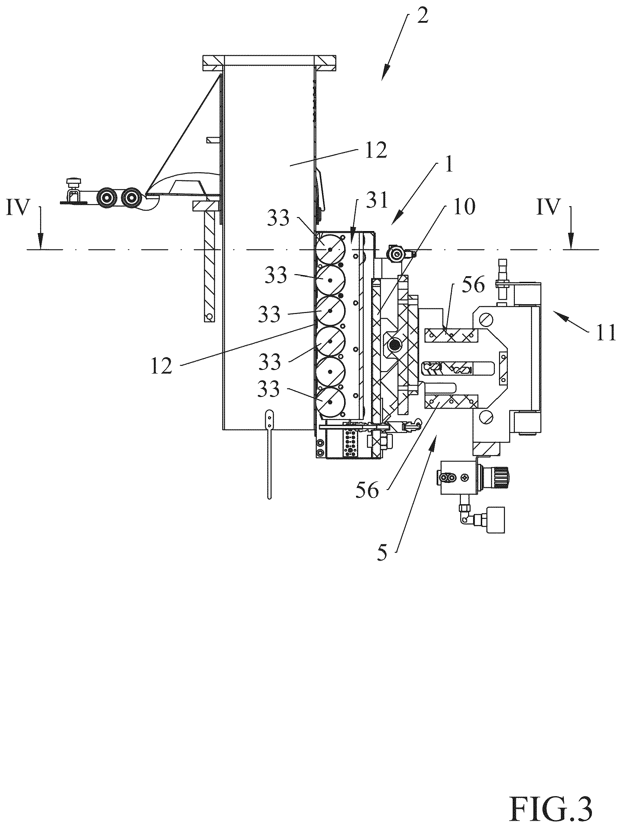

Figure 3 shows a section view according to the line III-III in Figure 2;

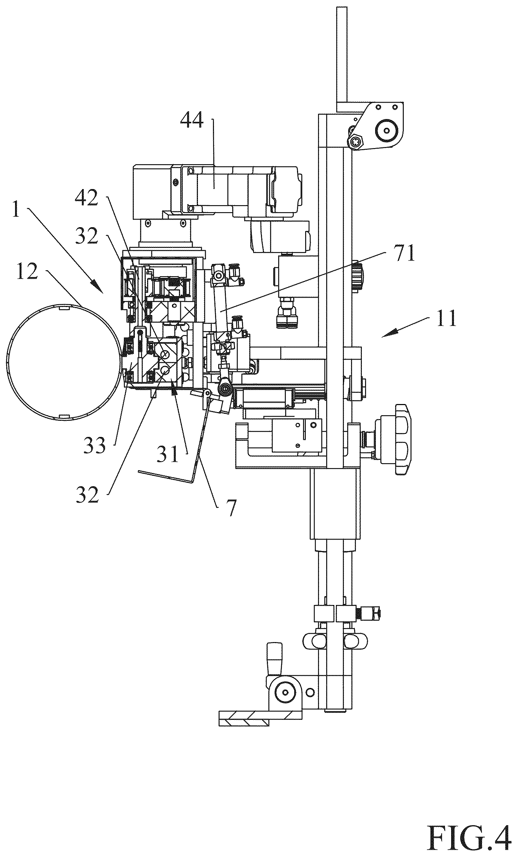

Figure 4 shows a section view according to the line IV-IV in Figure 3;
Figure 5 shows a first perspective view of the longitudinal sealing unit;
Figure 6 shows a second perspective view of the longitudinal sealing unit;

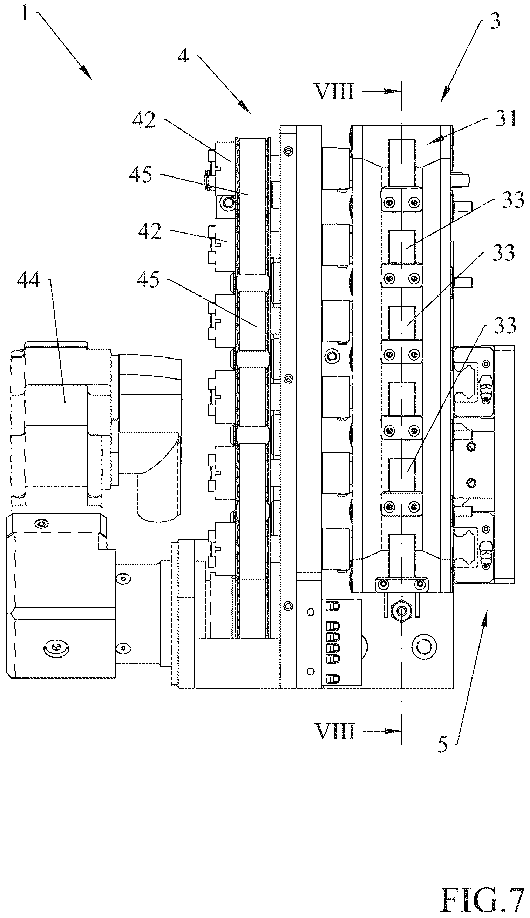

Figure 7 shows a front view of the longitudinal sealing unit;
Figure 8 shows a section view according to the line VIII-VIII in Figure 7;

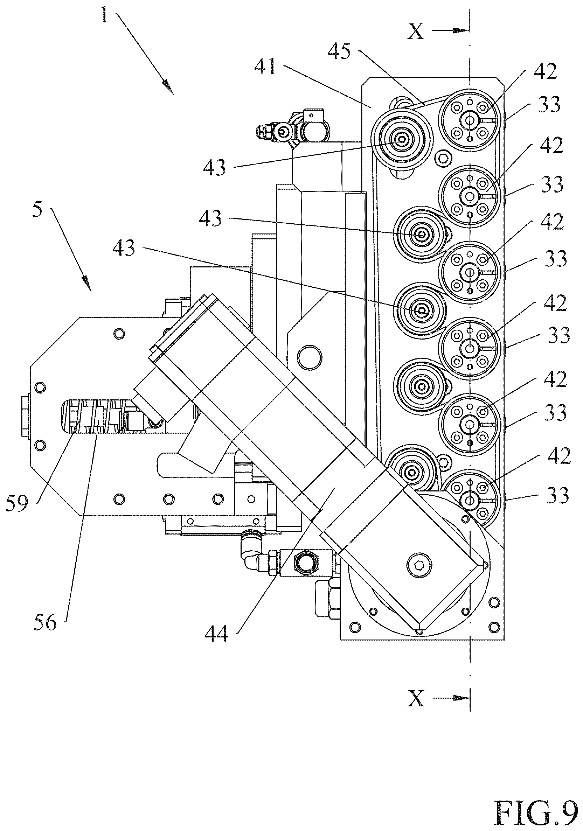

Figure 9 shows a side view of the longitudinal sealing unit;

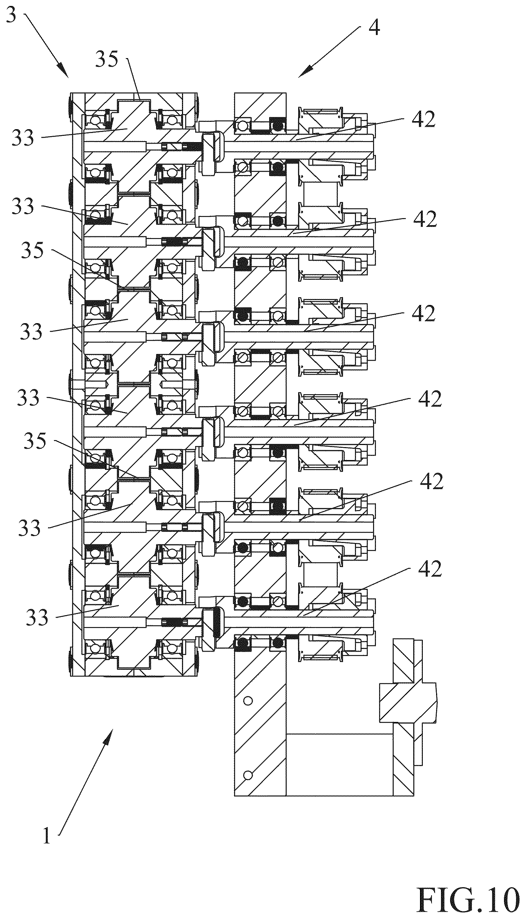

Figure 10 shows a section view according to the line X-X in Figure 9.

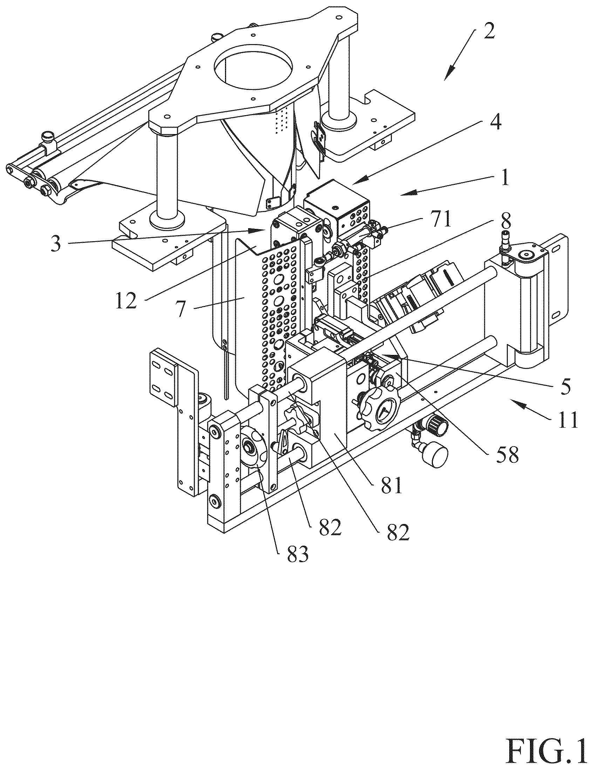

A packaging apparatus 2 for food products, e.g., pasta, comprises a forming tube 12 for the vertical sliding of a plastic film, a longitudinal sealing unit 1 for forming a tubular plastic film on said forming tube 12, and a supporting frame 11 with which the longitudinal sealing unit 1 is associated (Figure 1).

The forming tube 12 is fixed while the longitudinal sealing unit 1 is selectively movable with respect to the supporting frame 11 which includes positioning means suitable for defining a base position of the longitudinal sealing unit 1 with respect to the forming tube 12. The longitudinal sealing unit 1 is generally centred with respect to the forming tube 12 for carrying out a central seal; however, it is possible that the longitudinal sealing unit 1 is positioned in a decentred position with respect to the forming tube 12 for carrying out a decentred seal. The forming tube 12 generally has a round section, but can also have square or rectangular section.

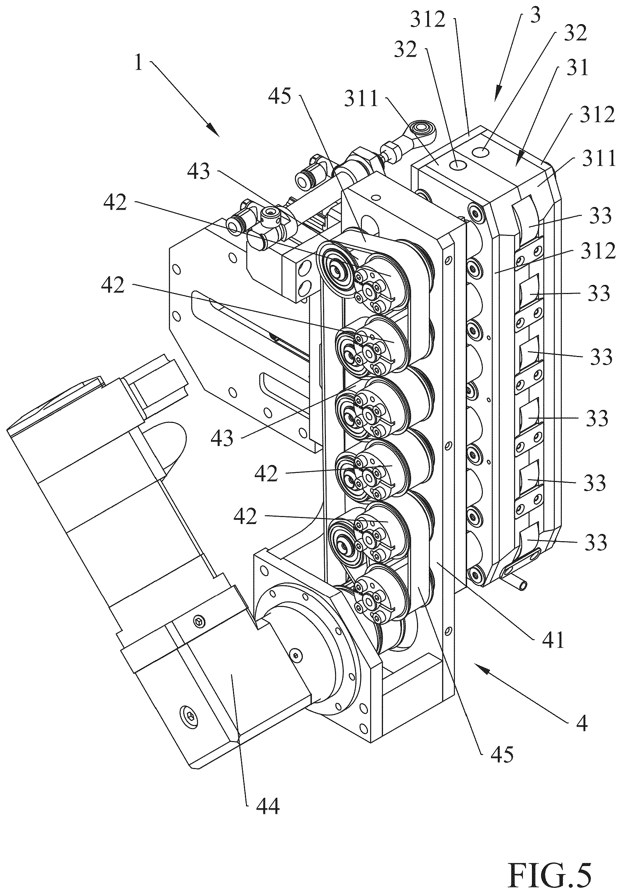

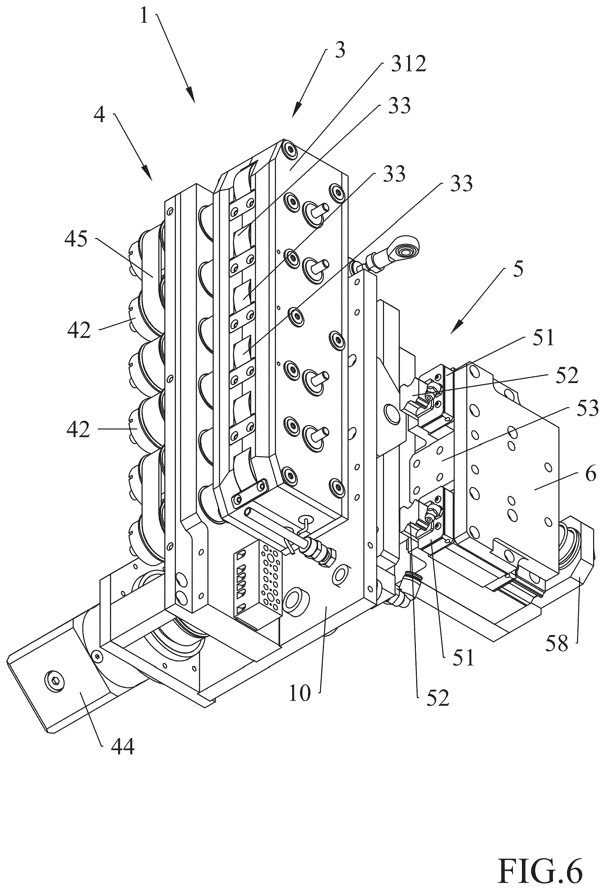

The longitudinal sealing unit 1 comprises a heating and sliding device 3, a motor block 4, a positioning device 5, a bearing plate 10 ,and a fixing plate 6 to the supporting frame 11 of the packaging apparatus 2 (Figures 5 and 6).

The positioning means of the supporting frame 11, including, for example, a block 81 sliding along bars 82 and a clamping wheel 83 for clamping the block 81 to the bars 82 (Figure 1), allow fixing the base position of the fixing plate 6, the positioning device 5 instead allowing, once the base position has been fixed, the heating and sliding device 3 to be moved with respect to the fixing plate 6, as will be clarified below. Therefore, there is a dual positioning, a preliminary one before the activation of the longitudinal sealing unit 1 by said positioning means, and an operational one for carrying out the seal.

The heating and sliding device 3 comprises a heating block 31, electric resistors 32 suitable for heating the heating block 31 in which they are included, and sealing rollers 33 rotatably associated with the heating block 31.

The heating block 31 is preferably supported by an insulating box-shaped body preferably consisting of three insulating plates 312.

The heating block 31 preferably consists of two half-blocks 311 which facilitate assembly.

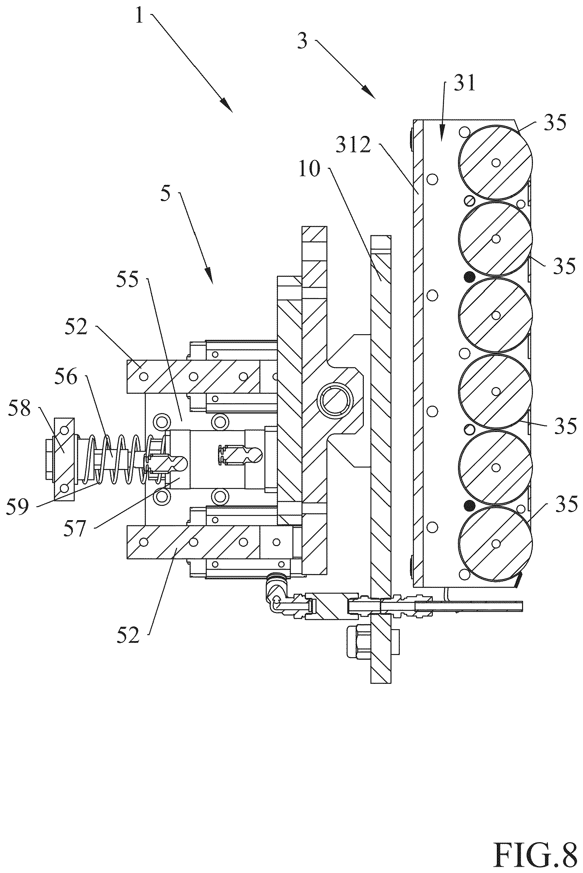

The sealing rollers 33, six in the preferred embodiment depicted in the figures, have a horizontal rotation axis and are housed in compartments 35 of the heating block 31 so as to be directly heated and protrude laterally therefrom so as to interact, while hot, with lateral edges of the plastic film (Figure 8).

The insulating box-shaped body is in the shape of a C so as to insulate the rear of the heating and sliding device 3, so that the heat concentrates in the front part where the sealing rollers 33 are provided.

The motor block 4 comprises a support plate 41, a plurality of drive rollers 42, each actuating the integral rotation of a respective sealing roller 33, deflection rollers 43, and a motor 44.

The drive rollers 42 are actuated synchronously by the motor 44 by means of a belt transmission 45. Alternatively, the transmission can be a chain or gear transmission, the synchronization of the drive rollers 42 being essential, possibly without deflection rollers 43.

The positioning device 5 is suitable for horizontally moving the heating and sliding device 3 between a sealing position and a rest position.

In the sealing position, the sealing rollers 33 interact with the lateral edges of the plastic film, sealing them and thus forming the tubular plastic film. In the rest position, the sealing rollers 33 are separate from the plastic film.

The positioning of the sealing rollers 33 is very important because the lateral edges of the plastic film must be touched almost in grazing contact, without excessive pressure to facilitate melting without generating undesired breakage of the plastic film.

The positioning device 5 comprises a pair of sliders 51 relatively sliding along horizontal guides 52 integral with the bearing plate 10, and a pneumatic piston 55 comprising a rod 56 suitable for exiting from a seat 57 of the pneumatic piston 55 and which includes a bracket 58 at one end integral with the supporting frame 11 (Figure 8).

The sliders 51 are integral with the fixing plate 6, so that the pneumatic piston 55 is suitable for controlling the horizontal movement of the horizontal guides 52 with which the heating and sliding device 3 and the motor block 4 are integral by means of the bearing plate 10, forming in turn a single block.

The positioning device 5 further comprises a spring 59 around the rod 56, pre-tensioned in traction and capable of rapidly moving the sealing rollers 33 away from the plastic film when the pneumatic piston 55 is deactivated. Therefore, the spring 59 serves a safety function in the absence of pneumatic removal action to prevent the plastic film from melting in an undesired manner.

The positioning device 5 can have a different configuration, being essential to move the heating and sliding device 3 in the horizontal direction, once the base position has been fixed by the positioning means of the supporting frame 11, between the sealing position and the rest position.

Preferably, the longitudinal sealing unit 1 further comprises a protective frame 7 selectively movable between a closed position, in which it protects the sealing rollers 33, namely in which the sealing unit 1 is not active with the heating and sliding device 3 in the rest position, and an open position, in which the sealing rollers 33 are free to interact with the plastic film, namely in which the longitudinal sealing unit 1 is active with the heating and sliding device 3 in the sealing position.

Preferably, the protective frame 7 is hinged to the bearing plate 10, rotating about a vertical axis by means of a pneumatic piston 71.

Preferably, a second protective frame 8 is further provided, fixed but removable, in which the drive rollers 42, the deflection rollers 43, and the belt transmission 45 are housed.

Operatively, starting from a configuration in which the sealing unit 1 is not active, a control unit (not shown) commands the activation of the electrical resistors 32, i.e., the heating of the heating block 31 and therefore of the sealing rollers 33, and the approach of the heating and sliding device 3 to the forming tube 12 until the sealing rollers 33 start to interact with the overlapping lateral edges of the plastic film sliding vertically on the forming tube 12, i.e., in which the heating and sliding device is in the sealing position. It is preferable that the sealing rollers 33 are already at the optimal operating temperature when they touch the lateral edges of the plastic film.

Shortly before contact with the plastic film, the control unit actuates the drive rollers 42, which allow the rotation of the sealing rollers 33 synchronously with the vertical sliding of the plastic film.

Advantageously, the sealing rollers 33 serve a dual function, i.e., they cooperate in the vertical sliding of the plastic film and heat the lateral edges thereof; therefore, the sealing of said lateral edges occurs, forming a tubular plastic film.

The axial distance between two consecutive sealing rollers 33, i.e., the distance between two rotation axes (centre-to-centre distance) of two consecutive sealing rollers 33, is preferably between 40 mm and 50 mm, even more preferably equal to 46 mm.

The diameter of the sealing rollers 33 is preferably between 40 mm and 50 mm, even more preferably equal to 44 mm.

It results that the distance between the outer circumferences of two consecutive sealing rollers 33 must be minimal, of the order of a few millimetres, preferably between 2 mm and 5 mm.

The diameter of all the sealing rollers 33 and the axial distance between consecutive sealing rollers 33 must be equal in the heating and sliding device 3.

It is noted that, if the sealing rollers 33 are too small, i.e., less than 40 mm in diameter, then they do not heat optimally. If they are too large, i.e., above than 50 mm in diameter, optimal sliding is impaired and too much heat is dissipated between two consecutive sealing rollers 33.

Heating is also an essential parameter in the selection of the axial distance between consecutive sealing rollers 33. If the sealing rollers 33 are at an axial distance of more than 50 mm, there is a risk of cooling of the plastic film between consecutive sealing rollers 33, i.e., a deterioration of the quality of the seal. An axial distance less than 40 mm leads to a constructional complication, with tolerances which would become very tight.

Very close sealing rollers 33 substantially avoid the plastic film between consecutive sealing rollers 33 from cooling down. Ideally, it is desired to create a single longitudinal heating body, however without sliding contact.

The number of sealing rollers 33 depends on the length of the longitudinal seal, i.e., on the bag to be made. Generally, at least six sealing rollers 33 according to the above-mentioned preferred dimensions are to be preferred, achieving a compromise between ensuring an almost continuous engagement on the plastic film and an optimal, homogeneous temperature on the lateral edges to be sealed, an excessive temperature damaging the plastic film where sealing is not required. In any case, the sealing rollers 33 must be at least four in number, a lower number not ensuring a homogeneous seal along the entire length.

It is noted that the vertical movement of the plastic film is not provided by the sealing rollers 33 but by tracks (not shown). The sealing rollers 33 rotate synchronously with said tracks but do not serve to vertically drag the plastic film. More simply, as already said, they cooperate in the sliding to avoid tears or accumulations of plastic film between consecutive sealing rollers 33.

Advantageously, the sealing rollers 33 are vertically close together in order to concentrate the heating and sliding action on a defined segment of plastic film.

The direct actuation of each sealing roller 33 by a respective drive roller 42 directly connected thereto, together with the belt transmission 45, allows an optimal synchronism of the sealing rollers 33 so as to avoid accumulations of plastic film between two consecutive sealing rollers 33.

If the sealing rollers 33 were mounted idle on the heating block 31, inevitable pockets of accumulation of plastic film would be created. The longitudinal sealing would be substantially impossible, especially because the sealing rollers 33 are mounted close together.

The film is not necessarily made of a plastic material, but generally of a packaging material, for example even of a paper material.

## Claims

1. Longitudinal sealing unit (1) for forming a tubular film for making bags in a packaging apparatus (2) for food products, comprising a forming tube (12) for the vertical sliding of a film made of packaging material, wherein the longitudinal sealing unit (1) comprises a heating and sliding device (3), a motor block (4) and a positioning device (5) with respect to the forming tube (12),
**characterised in that**
the heating and sliding device (3) comprises a heating block (31), electrical resistors (32) suitable for heating the heating block (31) in which they are included, and sealing rollers (33) rotatably associated with the heating block (31), wherein the sealing rollers (33) have a horizontal rotation axis and are housed in compartments (35) of the heating block (31) so as to be heated and protrude laterally from it so as to interact with the overlapping lateral edges of the film,
wherein the motor block (4) comprises a support plate (41), drive rollers (42) rotatably associated with the support plate (41), and a motor (44), wherein each drive roller (42) is adapted to actuate the integral rotation of a respective sealing roller (33), wherein the drive rollers (42) are actuated in synchrony by the motor (44) by means of a synchronization transmission (45),
wherein the positioning device (5) is adapted to horizontally move the heating and sliding device (3) between a sealing position and a rest position, in the sealing position the sealing rollers (33) interacting with the lateral edges of the film carrying out the sealing and therefore the formation of the tubular film, in the rest position the sealing rollers (33) being separated from the film.

2. Longitudinal sealing unit (1) according to claim 1, **characterised in that** the axial distance between two consecutive sealing rollers (33) is between 40 mm and 50 mm, preferably equal to 46 mm, while the diameter of the sealing rollers (33) is between 40 mm and 50 mm, preferably equal to 44 mm.

3. Longitudinal sealing unit (1) according to claim 1 or 2, **characterised in that** it comprises at least four sealing rollers (33), preferably six sealing rollers (33).

4. Longitudinal sealing unit (1) according to any of the preceding claims, **characterised in that** the heating block (31) is supported by an insulating box-shaped body (312) on the back of the heating and sliding device (3) so that the heat is concentrated in the front part where the sealing rollers (33) are provided.

5. Longitudinal sealing group (1) according to any of the preceding claims, **characterised in that** the heating block (31) is made up of two semi-blocks (311).

6. Longitudinal sealing unit (1) according to any of the preceding claims, **characterised in that** the positioning device (5) comprises
a pair of sliders (51) sliding along horizontal guides (52) integral with a bearing plate (10) suitable for integrally supporting the heating and sliding device (3) and the motor unit (4), and
a pneumatic piston (55) comprising a rod (56) suitable for exiting from a seat (57) and which provides a bracket (58) at one end integral with a supporting frame (11) of the packaging apparatus (2),
the sliders (51) being integral with a fixing plate (6) integral with the supporting frame (11), the movement of the rod (56) controlling the horizontal movement of the horizontal guides (52) and therefore of the heating and sliding device (3) and of the motor block (4) to which they are integral via the bearing plate (10).

7. Longitudinal sealing unit (1) according to claim 6, **characterised in that** the positioning device (5) comprises a spring (59) around the stem (56), pre-tensioned in traction and capable of rapidly moving the sealing rollers (33) away from the film in the event of deactivation of the pneumatic piston (55).

8. Longitudinal sealing unit (1) according to any of the preceding claims, **characterised in that** it comprises a protective frame (7) selectively movable between a closed position in which it protects the sealing rollers (33) separated from the film, namely in which the sealing unit (1) is not active with the heating and sliding device (3) in the rest position, and an open position in which the sealing rollers (33) are free to interact with the film, namely in which the longitudinal sealing unit (1) is active with the heating and sliding device (3) in the sealing position.

9. Longitudinal sealing group (1) according to claim 8, **characterised in that** the protective frame (7) is hinged to the bearing plate (10) by rotating around a vertical axis by means of a pneumatic piston (71).
